# EUROPEAN PATENT SPECIFICATION

(11) **EP 0 418 569 B1**
(45) Date of publication and mention of the grant of the patent: **05.11.1997**
(21) Application number: 90115942.6
(22) Date of filing: 20.08.1990
(51) Int. Cl.: H04N 9/89, H04N 9/86

(54) **Image signal reproducing apparatus**
Bildsignalwiedergabevorrichtung
Appareil de reproduction de signaux d'images

(30) Priority: 20.09.1989 JP 245594/89
(43) Date of publication of application: 27.03.1991
(73) Proprietor: CANON KABUSHIKI KAISHA, Tokyo (JP)
(72) Inventor: Nakano, Masaki, c/o Tamagawa Jigyosho, Canon K. K., Kawasaki-shi, Kanagawa-ken (JP)
(74) Representative: Pellmann, Hans-Bernd, Dipl.-Ing.

(56) References cited:
- EP-A- 0 059 333
- EP-A- 0 310 963
- US-A- 4 746 969
- FUNKSCHAU, vol. 59, no. 7, 27th March 1987, pages 32-34, Munchen, DE; "Time-Base-Corrector für Komponentensignale: Im Takt bleiben"
- PATENT ABSTRACTS OF JAPAN, vol. 11, no. 17 (E-471), 17th January 1987; & JP-A-61 187 489 (CANON) 21-08-1986

## Description

The invention relates to an image signal reproducing apparatus for reproducing, from a recording medium having image signals recorded in each field, the image signals.

EP-A-0 310 963 describes an apparatus comprising a carrier signal forming means for forming and outputting a carrier signal. This carrier signal is provided to modulators which can be compared to chrominance signal forming means for forming a chrominance signal from the color-difference signal output from a reproducing means by using the carrier signal forming means and for outputting a chrominance signal. An image signal is formed according to this document by providing the output signals from the modulators to an adder.

As to the current television signal, scanning is performed by skipping alternate horizontal lines, that is, the 2:1 interlace scanning method is employed, as a general rule. Of the kinds of the television signal, in the case of, for example, the NTSC standards, the interlace scanning is carried out in interlaced fashion with the alternate lines being scanned each 1/60 sec. in turn. As one turn of interlace scanning forms an image signal for one field, image signals for two fields are used to form one frame of picture in each 1/30 sec..

As to the NTSC type television signal, one frame of picture is composed of 525 scanning lines, since, as is understandable from the above, one frame of picture is completed by two fields of picture.

Further, to the television signal, a horizontal synchronizing signal in every horizontal scanning period and a vertical synchronizing signal in every vertical scanning period are added. At the boundary between the successive two field periods, continuity of those synchronizing signals is maintained.

Meanwhile, to record such a television signal on the magnetic disk or like recording medium and reproduce it therefrom, there is a still video recording and reproduction apparatus.

In the still video recording and reproducing apparatus, as the recording medium or magnetic disk can form a plurality of concentric tracks, while the magnetic disk is rotating at 3,600 rpm, an image signal for one field is recorded in one track. By reproducing the recorded image signal for one and the same field repeatedly, a signal for a still picture is obtained.

Also, the above-described way in which the still picture is reproduced includes another process that causes the image signal to correspond with the before-described scanning process for the television signal. For this purpose, a delay element for a half horizontal synchronizing period (1/2H) is used to delay an image signal for one field by 1/2H except for the vertical synchronizing period. The image signal which has been delayed by the delay element and the image signal which is not subjected to delaying are alternately output in each field period. Thus, the continuity of the horizontal synchronizing signal is maintained, and the so-called skew compensation processing that corresponds to the before-described interlace scanning is performed.

The still video recording and reproducing apparatus of the kind described above has a feature that a luminance signal is frequency-modulated, and color-difference signals, after being converted into a color-difference line-sequential signal, are frequency-modulated and then recorded in frequency-multiplexed form with the aforesaid frequency-modulated luminance signal on the magnetic disk. At the time of reproduction, the frequency-modulated luminance signal and the frequency-modulated color-difference line-sequential signal are separated out of a signal reproduced from the magnetic disk. Each of the frequency-modulated signals is then demodulated. Further, the color-difference line-sequential signal is converted into simultaneous color-difference signals, which are then balanced-modulated to obtain a chrominance signal. The chrominance signals is frequency-multiplexed with the frequency-demodulated luminance signal to form a composite image signal to be supplied to an external device, for example, display device.

Further, the above-described composite image signal must be made to conform with the standards of the television signal.

For example, according to the PAL standards for television signal, the simultaneous signals converted into two kinds of color-difference signals (R-Y, B-Y) have to be balanced-modulated by using an R-Y signal modulating subcarrier signal f_{SCR} and a B-Y signal modulating subcarrier signal f_{SCB} with their phases alternating each other in every one horizontal scanning period, so that the chrominance signals are formed. And, as to the change of the phase relation between the subcarrier signals f_{SCR} and f_{SCB}, the continuity is kept for two field periods. If the continuity of change of the phase relation fails to be kept, no correct chrominance signals would be formed. If the thus-obtained chrominance signals would be included in the composite image signal, a picture of right colors could not appear on the display.

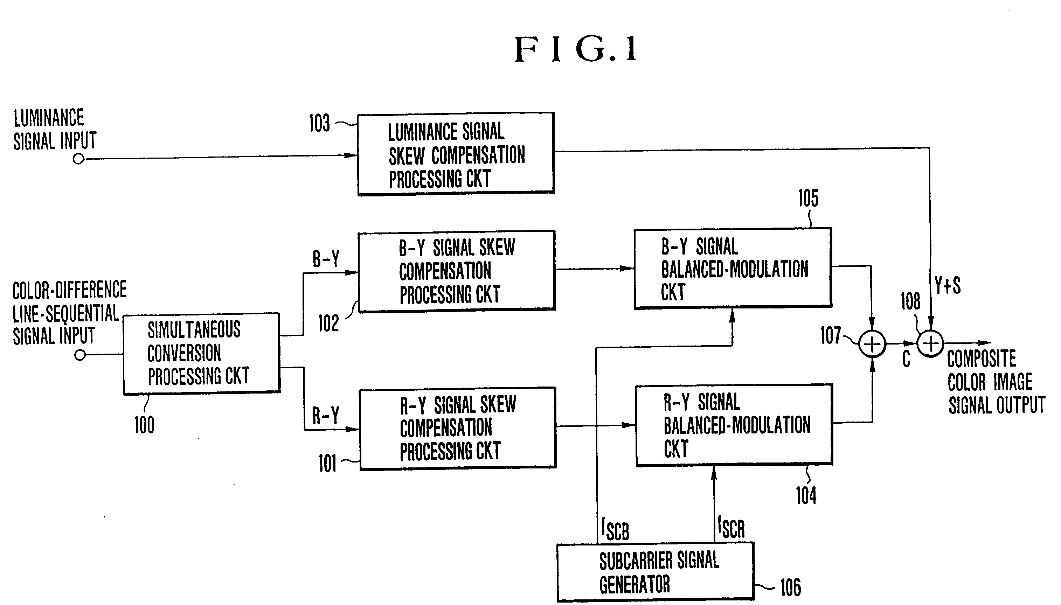

By the way, in the conventional still video reproducing apparatus, as a color picture is obtained by repeating the reproducing of the color image signal for one field from one and the same track on the magnetic disk, a circuit of such construction as shown in Fig. 1 is used on receipt of the reproduced and demodulated luminance signal and color-difference line-sequential signal to form a composite still color image signal which conforms to the PAL standards.

As shown in Fig. 1, of the luminance signal and the color-difference line-sequential signal reproduced from the magnetic disk (not shown) and demodulated, at first, the color-difference line-sequential signal is converted into the simultaneous color-difference signals by a simultaneous conversion processing circuit 100 to form two color-difference signals (R-Y, B-Y).

And, the thus-obtained R-Y and B-Y signals and the luminance signal are subjected to a skew compensation processing in an R-Y signal skew compensation processing circuit 101, a B-Y signal skew compensation processing circuit 102 and a luminance signal skew compensation processing circuit 103 respectively. Then, the luminance signal is supplied to a multiplexer circuit 108, and the R-Y signal and the B-Y signal are supplied respectively to an R-Y signal balanced-modulation circuit 104 and a B-Y signal balanced-modulation circuit 105.

In the B-Y signal balanced-modulation circuit 105, the B-Y signal that has been subjected to the skew compensation in the B-Y signal skew compensation processing circuit 102 is balanced-modulated by using the subcarrier signal f_{SCB} generated from a subcarrier signal generator 106. The balanced-modulated B-Y signal is supplied to a multiplexer circuit 107.

Also, in the R-Y signal balanced-modulation circuit 104, the R-Y signal that has been subjected to the skew compensation in the R-Y signal skew compensation processing circuit 101 is balanced-modulated by using the subcarrier signal f_{SCR} generated from the subcarrier signal generator 106. The balanced-modulated R-Y signal is supplied to the multiplexer circuit 107.

It is noted that the subcarrier signal generator 106 produces the subcarrier signals f_{SCB} and f_{SCR} in a 90° phase shift from each other, and further inverts the phase of the subcarrier signal f_{SCR} by every one horizontal scanning period.

Then, such balanced-modulated R-Y signal and B-Y signal by the R-Y signal balanced-modulation circuit 104 and the B-Y signal balanced-modulation circuit 105 are frequency-multiplexed in the multiplexer circuit 107. Thus, the chrominance signal which conforms to the PAL standards for television signal is formed in the multiplexer circuit 107 and supplied to the multiplexer circuit 108. In this multiplexer circuit 108, the luminance signal supplied from the luminance signal skew compensation processing circuit 103, that is, the luminance signal that has been subjected to the skew compensation, and the chrominance signal supplied from the multiplier circuit 107 are frequency-multiplexed. From the multiplexer circuit 108, a composite color image signal conforming to the PAL type television signal is output.

To afford the signal for a still color picture based on the PAL standards for television signal in such a way as described above that a color image signal for one field recorded in one track on the magnetic disk is repeatedly reproduced, it has been necessary in the prior art that each of the luminance signal and the two color-difference signals reproduced from the magnetic disk is subjected to the skew compensation by the respective individual skew compensation processing circuit. This leads to an increase in the scale of circuitry and the production cost.

An object of the invention is to provide an image signal reproducing apparatus which can solve the above-described problem.

Another object of the invention is to provide an image signal reproducing apparatus of simple form which nevertheless ensures that the signal reproduced from the recording medium is restored to the original image signal.

Another object of the invention is to provide an image signal reproducing apparatus which is able to diminish the influence of random noise occurring at the time of reproduction.

A further object of the invention is to provide an image signal forming apparatus which makes it possible to reduce the scale of circuit and to afford a reduction of the cost.

This object are achieved by an apparatus according to claim 1.

Other objects and features than those described above of the invention will become apparent from the following detailed description of embodiments of the invention by reference to the drawings:

Fig. 1 is a diagram illustrating the construction of part of a reproduced signal processing circuit in the conventional still video reproducing apparatus.

Fig. 2 is a diagram of an embodiment of the invention applied to a still video reproducing apparatus adapted to the television signal of the PAL standards with the parts schematically shown.

Fig. 3 is a chart illustrating the output patterns of the carrier signals f_{SCB} and f_{SCR} generated by the subcarrier signal generator 19 of Fig. 2.

Fig. 4 and Fig. 6 are diagrams roughly illustrating the constructions of other embodiments of the still video reproducing apparatus adapted to the television signal of the PAL standards according to the invention.

Fig. 5 is a chart illustrating the output patterns of the carrier signals f_{SCa} and f_{SCb} generated by the subcarrier signal generator 26 of Fig. 4 or Fig. 6.

### Detailed Description of the Preferred Embodiments:

The present invention is next described in connection with embodiments thereof.

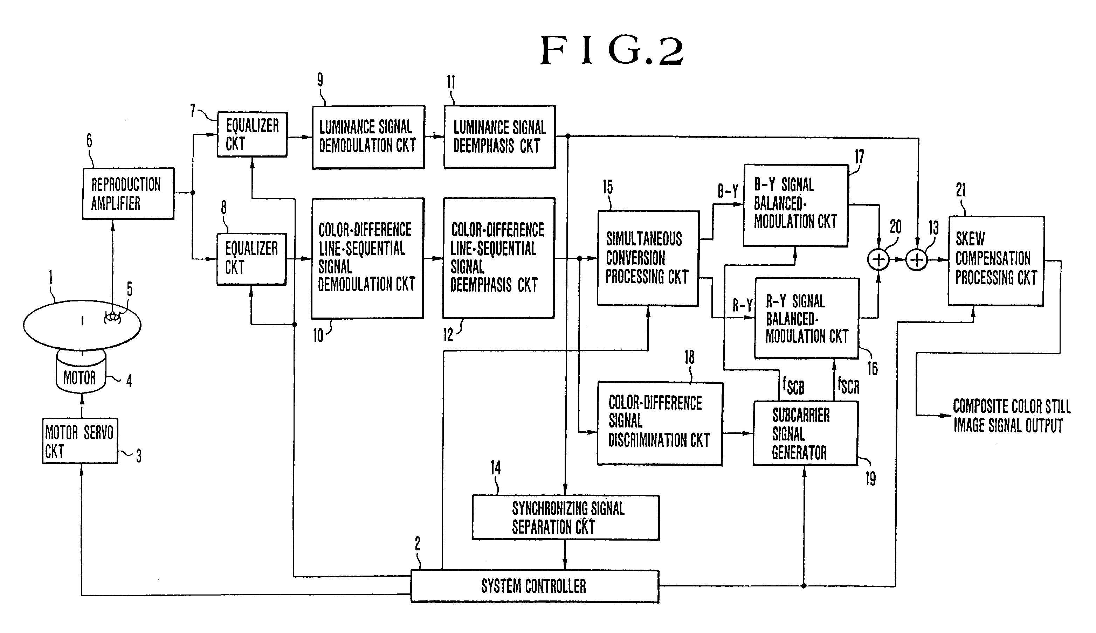

Fig. 2 in block diagram shows the construction of main parts of an embodiment of a still video reproducing apparatus according to the invention applied to the television signal of the PAL standards.

In Fig. 2, a composite color image signal for one field is recorded in each of a plurality of concentric tracks formed on a magnetic disk 1. By operating an operation part (not shown), a system controller 2 commands a motor servo circuit 3 to start a reproducing operation. The motor servo circuit 3 then controls a motor 4 in such a manner that the aforesaid magnetic disk 1 rotates at 3000 rpm.

Then, as the magnetic disk 1 is rotating as described above, a desired one of the tracks is traced by a magnetic head 5 so that the signal recorded in that track is reproduced to be supplied to a reproduction amplifier 6.

In the reproduction amplifier 6, the signal reproduced from the magnetic disk 1 by the magnetic head 5 is amplified. The output of the reproduction amplifier 6 is supplied to equalizer circuits 7 and 8.

The equalizer circuit 7 extracts a component of the amplified signal output from the reproduction amplifier 6 which represents the frequency-modulated luminance signal, and corrects the frequency characteristic of the extracted signal. The output of the equalizer circuit 7 is supplied to a luminance signal demodulation circuit 9. The equalizer circuit 8 extracts a component of the amplified signal output from the reproduction amplifier 9 which represents the frequency-modulated color-difference line-sequential signal, and corrects the frequency characteristic of the extracted signal. The output of the equalizer circuit 8 is supplied to a color-difference line-sequential signal demodulation circuit 10.

By the way, the equalizing characteristics of the equalizer circuits 7 and 8 are controlled in accordance with the track position on the magnetic disk traced by the magnetic head 5. For this purpose, the system controller 2 supplies the equalizer circuits 7 and 8 with a track position indicating signal representing the track position on the magnetic disk 1 traced by the magnetic head.

The luminance signal demodulation circuit 9 restores the luminance signal by frequency-demodulating the signal output from the equalizer circuit 7 which has a frequency band corresponding to the frequency-modulated luminance signal component, and supplies the luminance signal to a luminance signal deemphasis circuit 11. The color-difference line-sequential signal demodulation circuit 10 restores the color-difference line-sequential signal by frequency-demodulating the signal output from the equalizer circuit 8 which has a frequency band corresponding to the frequency-modulated color-difference line-sequential signal component, and supplies the color-difference line-sequential signal to the color-difference line-sequential signal deemphasis circuit 12.

In the luminance signal deemphasis circuit 11, a deemphasis processing having the characteristic opposite to that of the emphasis processing applied at the time of recording the color image signal is applied to the luminance signal restored by the luminance signal demodulation circuit 9. The output of the luminance signal deemphasis circuit 11 is supplied to a multiplexer circuit 13 and a synchronizing signal separation circuit 14. In the color-difference line-sequential signal deemphasis circuit 12, like the above-described case of the luminance signal, a deemphasis processing having the characteristic opposite to that of the emphasis processing applied at the time of the recording is applied to the color-difference line-sequential signal restored by the color-difference line-sequential signal demodulation circuit 10. The output of the color-difference line-sequential signal deemphasis circuit 12 is supplied to a simultaneous conversion processing circuit 15.

The synchronizing signal separation circuit 14 receives the luminance signal supplied from the luminance signal deemphasis circuit 11 and separates out a composite synchronizing signal added to the luminance signal and supplies the composite synchronizing signal to the system controller 2.

Then, the system controller 2 controls the simultaneous conversion processing circuit 15 in synchronism with a horizontal synchronizing signal in the composite synchronizing signal separated by the synchronizing signal separation circuit 14. The simultaneous conversion processing circuit 15 performs a simultaneous conversion processing in which an R-Y signal and a B-Y signal which are alternately supplied in every one horizontal synchronizing period from the color-difference line-sequential deemphasis circuit 12 are simultaneously output. The output R-Y signal is supplied to an R-Y signal balanced-modulation circuit 16. The output B-Y signal is supplied to a B-Y signal balanced-modulation circuit 17.

By the way, the color-difference line-sequential signal deemphasis circuit 12 produces the color-difference line-sequential signal whose pedestal portion is in offset states so that the direct current level differs with different kinds of the subsequent color-difference signals. A color-difference signal discrimination circuit 18 discriminates the kind of the color-difference line-sequential signal (between the R-Y signal and B-Y signal) supplied from the color-difference line-sequential signal deemphasis circuit 12 in every one horizontal synchronizing period. The discrimination result is supplied to a subcarrier signal generator 19.

In other words, the color-difference signal discrimination circuit 18, when having detected the fact that the kind of the color-difference line-sequential signal supplied from the color-difference line-sequential signal deemphasis circuit 12 is the R-Y signal, supplies a discrimination signal of low level, or when having detected the fact that it is the B-Y signal, supplies another discrimination signal of high level, to the subcarrier signal generator 19. The subcarrier signal generator 19 produces a carrier signal f_{SCB} whose phase is 0° independently of the level of the discrimination signal output from the color-difference signal discrimination circuit 18 and another carrier signal f_{SCR} whose phase is changed over between +90° and -90° in every horizontal synchronizing period depending on the level of the discrimination signal output from the color-difference signal discrimination circuit 18. The carrier signal f_{SCB} is supplied to the B-Y signal balanced-modulation circuit 17. The carrier signal f_{SCR} is supplied to the R-Y signal balanced-modulation circuit 16.

Meanwhile, the subcarrier signal generator 19 is supplied with a phase changeover control signal from the system controller 2. The system controller 2 produces the phase changeover control signal whose phase inverts in every one field period in synchronism with a vertical synchronizing signal in the composite synchronizing signal separated by the synchronizing signal separation circuit 14.

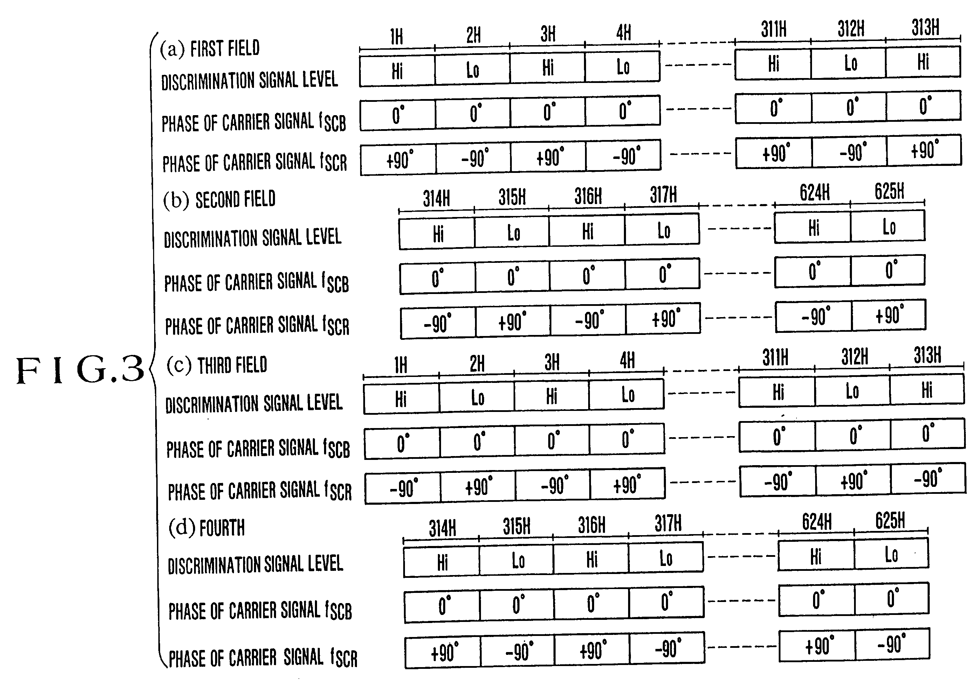

The subcarrier signal generator 19 is so formed as to produce one of the carrier signals f_{SCR} of +90° and -90° phases depending on the level of the discrimination signal supplied from the color-difference signal discrimination circuit 18 and the phase of the phase changeover control signal supplied from the system controller 2. Its output patterns are shown in Fig. 3.

As shown in Fig. 3, when a first field period is indicated by the phase changeover control signal output from the system controller 2, the subcarrier signal generator 19 produces the carrier signal f_{SCR} of +90° phase for a period in which the discrimination signal supplied from the color-difference signal discrimination circuit 18 is at high level (in the drawing, Hi). Also, when a second field period is indicated, the subcarrier signal generator 19 produces the carrier signal f_{SCR} of -90° phase for a period in which the discrimination signal supplied from the color-difference signal discrimination circuit 18 is Hi, and the carrier signal f_{SCR} of +90° phase for a period in which the discrimination signal is at low level (Lo). When a third field period is indicated, the subcarrier signal generator 19 produces the carrier signal f_{SCR} of -90° phase for a period in which the discrimination signal supplied from the color-difference signal discrimination circuit 18 is Hi and the carrier signal f_{SCR} of +90° phase for a period in which the discrimination signal is Lo. Further, when a fourth field period is indicated, the subcarrier signal generator 19 produces the carrier signal f_{SCR} of +90° phase for a period in which the discrimination signal supplied from the color-difference signal discrimination circuit 18 is Hi and the carrier signal f_{SCR} of -90° phase for a period in which the discrimination signal is Lo. It is to be noted that this phase changeover pattern of the carrier signal f_{SCR} is performed repeatedly in every four field periods. And, by using such carrier signals f_{SCR} and f_{SCB} output from the subcarrier signal generator 19, the balanced-modulated R-Y signal and B-Y signal in the R-Y signal balanced-modulation circuit 16 and the B-Y signal balanced-modulation circuit 17 are mixed in a multiplexer circuit 20. From the multiplexer circuit 20, a chrominance signal conforming to the television signal of the PAL standards is thus output.

And, the chrominance signal output from the multiplexer circuit 20 is supplied to a multiplexer circuit 13, where the chrominance signal is frequency-multiplexed with the luminance signal output from the luminance signal deemphasis circuit 11. From the multiplexer circuit 13, a color image signal for one field conforming to the television signal of the PAL standards is output, which is then supplied to a skew compensation processing circuit 21.

The skew compensation processing circuit 21 performs a skew compensation processing by changing over between an output representing the delay by a 1/2 horizontal synchronizing period of the color image signal for one field supplied from the multiplexer circuit 13 and another output without the delay in every one vertical synchronizing period, and produces the output as a composite color still image signal conforming to the television signal of the PAL standards.

It is to be noted that, as has been described above, from the skew compensation processing circuit 21, depending on the phase changeover control signal supplied from the system controller 2, the delayed color image signal for one field by the 1/2 horizontal synchronizing period and the not delayed color image signal for one field by the 1/2 horizontal synchronizing period are alternately output in every one vertical synchronizing period.

As has been described above, in the present embodiment, with respect to the two kinds of color-difference signals reproduced from the magnetic disk, before application of the skew compensation processing, the carrier signal whose phase is changed over in synchronism with changeover timing of the color-difference signals of the color-difference line-sequential signal at the time of the reproduction is used for balanced-modulating the aforesaid two kinds of color-difference signals before they are mixed to form the chrominance signal, and it is after this that the skew compensation processing is applied. Hence, one skew compensation processing circuit is sufficient. This leads to possibilities of largely reducing the circuit scale and of realizing a low production cost.

Another embodiment of the invention is described below.

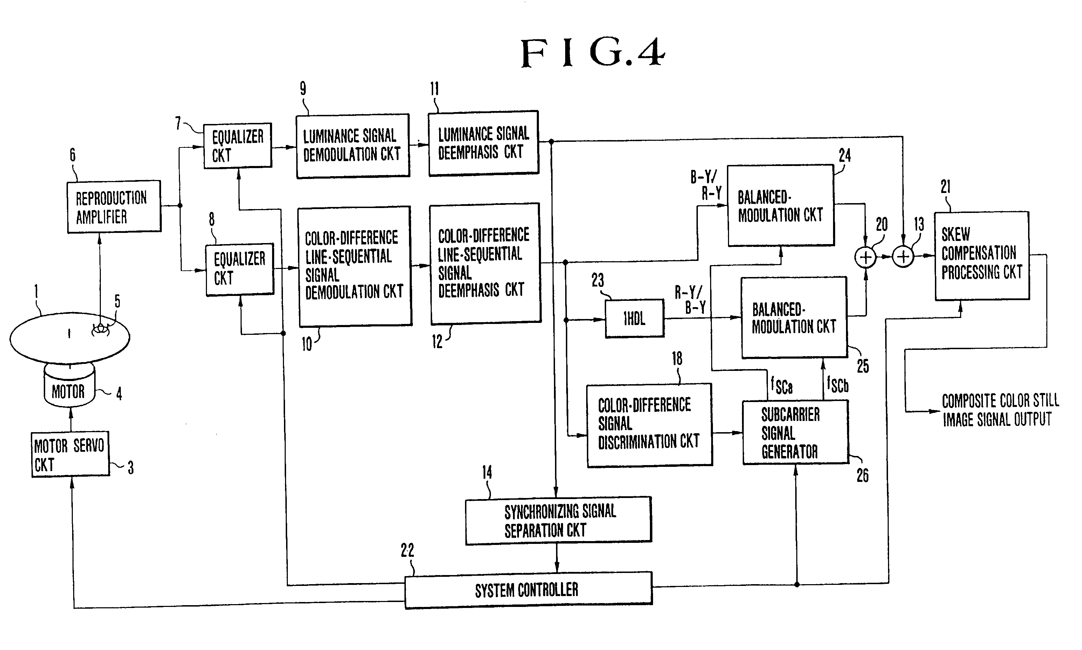

Fig. 4 is a diagram illustrating the construction of the main parts of another embodiment of the still video reproducing apparatus according to the invention applied to the television signal of the PAL standards.

Incidentally, in Fig. 4, the similar constituent parts to those of Fig. 2 are denoted by the same reference numerals and their more detailed explanation is omitted.

In Fig. 4, similar to Fig. 2, the luminance signal restored from the signal reproduced from the magnetic disk 1 is supplied to the multiplexer circuit 13 and the synchronizing signal separation circuit 14. The color-difference line-sequential signal is supplied to the color-difference signal discrimination circuit 18, a delay line (1HDL) 23 by one horizontal synchronizing period line and a balanced-modulation circuit 24. The color-difference line-sequential signal delayed for one horizontal synchronizing period by the 1HDL 23 is then supplied to a balanced-modulation circuit 25.

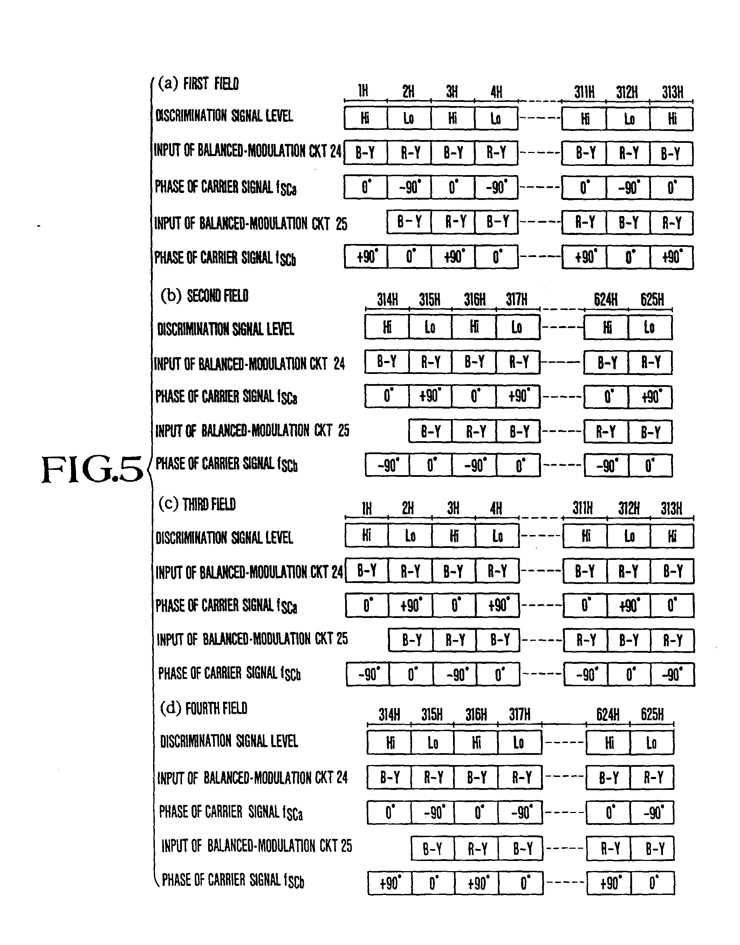

As is understandable from the above, to the balanced-modulation circuits 24 and 25, the color-difference signals of different kinds from each other are alternately supplied in every one horizontal synchronizing period (see Fig. 5).

Meanwhile, in the color-difference signal discrimination circuit 18, on detection of the fact that the kind of the color-difference line-sequential signal supplied from the color-difference line-sequential signal deemphasis circuit 12 is the R-Y signal, a discrimination signal of low level (Lo), or on detection of the fact that it is the B-Y signal, a discrimination signal of high level (Hi), is formed, which is then supplied to the subcarrier signal generator 26. From the system controller 22, a phase changeover control signal whose phase is inverted in every one field period in synchronism with the vertical synchronizing signal in the composite synchronizing signal separated by the synchronizing signal separation circuit 14 from the luminance signal output from the luminance signal deemphasis circuit 11 is supplied to the subcarrier signal generator 26. Depending on the level of the discrimination signal supplied from the color-difference signal discrimination circuit 18 and the phase of the phase changeover control signal supplied from the system controller 22, the subcarrier signal generator 26 can change the phases of output carrier signals f_{SCa} and f_{SCb} in every one horizontal synchronizing period. Its output patterns are shown in Fig. 5.

As shown in Fig. 5, when a first field period is indicated by the phase changeover control signal output from the system controller 22, the subcarrier signal generator 26 produces the carrier signal f_{SCa} of 0° phase and the carrier signal f_{SCb} of +90° phase for a period in which the discrimination signal supplied from the color-difference signal discrimination circuit 18 is Hi. For a period in which the discrimination signal is Lo, it produces the carrier signal f_{SCa} of -90° phase and the carrier signal f_{SCb} of 0° phase. Also, when a second field period is indicated, the subcarrier signal generator 26 produces the carrier signal f_{SCa} of 0° phase and the carrier signal f_{SCb} of -90° phase for a period in which the discrimination signal supplied from the color-difference signal discrimination circuit 18 is Hi. For a period in which the discrimination signal is Lo, it produces the carrier signal f_{SCa} of +90° phase and the carrier signal f_{SCb} of 0° phase. Also, when a third field period is indicated, the subcarrier signal generator 26 produces the carrier signal f_{SCa} of 0° phase and the carrier signal f_{SCb} of -90° phase for a period in which the discrimination signal supplied from the color-difference signal discrimination circuit 18 is Hi. For a period in which the discrimination signal is Lo, it produces the carrier signal f_{SCa} of +90° phase and the carrier signal f_{SCb} of 0° phase. Further, when a fourth field period is indicated, the subcarrier signal generator 26 produces the carrier signal f_{SCa} of 0° phase and the carrier signal f_{SCb} of +90° phase for a period in which the discrimination signal supplied from the color-difference signal discrimination circuit 18 is Hi, and produces the carrier signal f_{SCa} of -90° phase and the carrier signal f_{SCb} of 0° phase for a period in which the discrimination signal is Lo. It is to be noted that this phase changeover pattern of the carrier signals f_{SCa} and f_{SCb} is carried out repeatedly in every four field periods.

And, such carrier signals f_{SCa} and f_{SCb} output from the subcarrier signal generator 26 are used in the balanced-modulation circuits 24 and 25. The balanced-modulated R-Y signal and B-Y signals are then mixed in a multiplexer circuit 20. From the multiplexer circuit 20, therefore, a chrominance signal conforming to the television signal of the PAL standards is output.

Subsequently, the chrominance signal output from the multiplexer circuit 20 is multiplexed with the luminance signal similar to the embodiment shown in Fig. 2, then subjected to the skew compensation in the skew compensation processing circuit 21 and then output as a composite color still image signal conforming to the television signal of the PAL standards.

It will be appreciated from the above that in the other embodiment of the invention shown in Fig. 4, as the color-difference line-sequential signal restored from the signal reproduced from the magnetic disk is used to obtain a delayed signal by one horizontal synchronizing period and a not delayed signal, it is after these two signals each have been balanced-modulated that they are mixed. This enables omission of the simultaneous conversion processing circuit which would otherwise be necessary as in the embodiment shown in Fig. 2. Thus, it becomes possible to further simplify the structure.

Still another embodiment of the invention is described below.

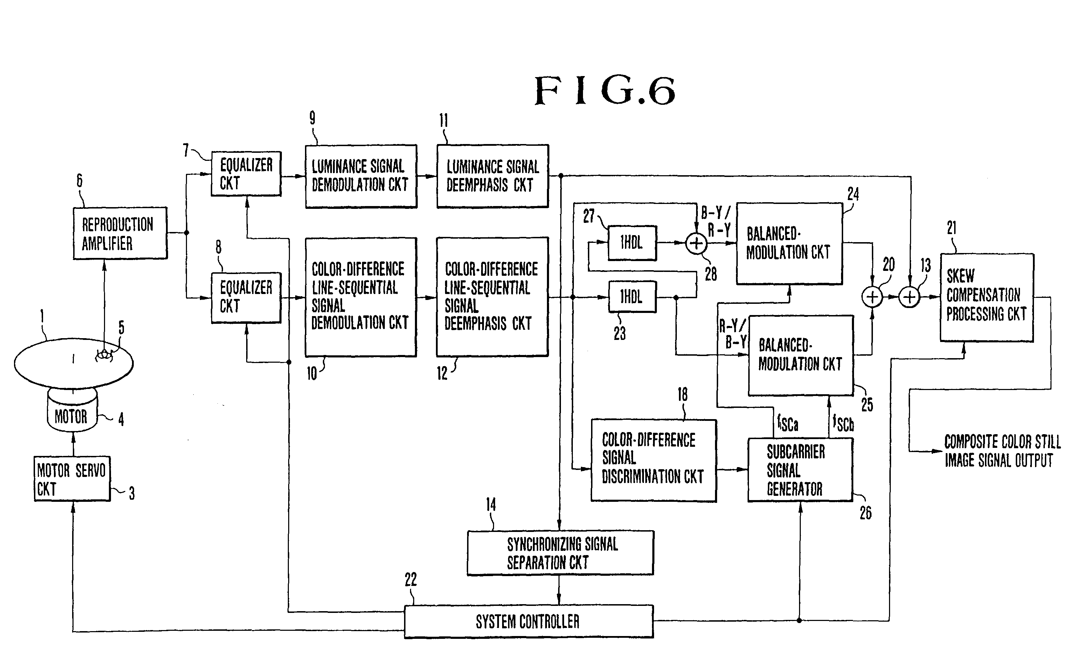

Fig. 6 is a diagram illustrating the construction of the main parts of another embodiment of the still video reproducing apparatus according to the invention applied to the television signal of the PAL standards.

Incidentally, in Fig. 6, the similar constituent parts to those shown in Fig. 2 and Fig. 4 are denoted by the same reference numerals and their more detailed explanation is omitted.

In the embodiment shown in Fig. 6, like the embodiment shown in Fig. 4, the color-difference line-sequential signal restored from the magnetic disk 1 and output from the color-difference line-sequential signal deemphasis circuit 12 is not supplied directly to the balanced-modulation circuit 24, but the color-difference line-sequential signal output from the color-difference line-sequential signal deemphasis circuit 12 is delayed for two horizontal synchronizing periods by the 1HDLs 23 and 27. In an adder 28, a color-difference line-sequential signal representing the average of such a delayed signal and the color-difference line-sequential signal which is not delayed by the 1HDLs 23 and 27 is formed. The color-difference line-sequential signal output from the adder 28 is supplied to the balanced-modulation circuit 24. By taking the average of the color-difference line-sequential signals in such a way, it becomes possible to prevent the signal from being deteriorated by the random noise occurring in the color-difference line-sequential signal at the time of the reproduction.

As has been described above, according to the invention, it becomes possible to provide an image signal reproducing apparatus which enables the circuit scale to be reduced and the production cost to be lowered.

The image signal reproducing apparatus of the invention is an apparatus for reproducing, from a recording medium having recorded thereon, an image signal for one field composed of a luminance signal and a color-difference line-sequential signal, the image signal, wherein as the recording medium is reproduced, the luminance signal and the color-difference line-sequential signal are separated from the reproduced image signal, and a carrier signal whose phase is changed over in synchronism with timing of changeover of color-difference signals in the separated color-difference line-sequential signal is formed, then a chrominance signal is formed from the color-difference line-sequential signal by using the carrier signal, then the luminance signal and the chrominance signal are multiplexed to form a color image signal for one field, and further a skew compensation processing is applied to the color image signal for one field, thus forming a color still image signal for one frame of picture, thereby making it possible to achieve a reduction of the scale of circuitry and a low production cost without deteriorating the quality of the reproduced image signal.

## Claims

1. An image signal reproducing apparatus for reproducing, from a recording medium having recorded thereon an image signal for one field composed of a luminance signal and a color-difference line-sequential signal, the apparatus, comprising:
(A) reproducing means (6-12) for reproducing the image signal recorded on the recording medium, separating the image signal into the luminance signal and the color-difference line-sequential signal, and outputting the luminance signal and the color-difference line-sequential signal;
(B) carrier signal forming means (19) for forming and outputting a carrier signal a phase of which is changed over in synchronism with timing of changeover of color-difference signals in the color-difference line-sequential signal output from said reproducing means;
(C) chrominance signal forming means (16, 17) for forming a chrominance signal from the color-difference line-sequential signal output from said reproducing means by using the carrier signal output from said carrier signal forming means, and for outputting the chrominance signal; and
(D) color still image signal forming means (21) for forming a color image signal for one field by multiplexing the luminance signal output from said reproducing means and the chrominance signal output from said chrominance signal forming means, and for applying a skew compensation processing to the color image signal by alternatingly introducing half a horizontal synchronizing period and zero delay to said color image signal in subsequent vertical synchronizing periods to form and output a color still image signal for one picture.

2. An apparatus according to claim 1, wherein said chrominance signal forming means includes:
(A) simultaneous conversion means for converting the color-difference line-sequential signal output from said reproducing means into two kinds of color-difference signals which are simultaneously output;
(B) balanced-modulating means for balance-modulating each of the two kinds of color-difference signals output from said simultaneous conversion means by using the carrier signal output from said carrier signal forming means, and for outputting the balanced-modulated two kinds of color-difference signals; and
(C) frequency-multiplexing means for frequency-multiplexing the balanced-modulated two kinds of color-difference signals to output a frequency-multiplexed signal.

3. An apparatus according to claim 1, wherein said carrier signal forming means is arranged to form a first carrier signal a phase of which does not change and a second carrier signal a phase of which is inverted in synchronism with timing of changeover of color-difference signals in the color-difference line-sequential signal, and to output the first and second carrier signals.

4. An apparatus according to claim 3, wherein said second carrier signal has its phase shifted 90° relative to said second carrier signal.

5. An apparatus according to claim 1, comprising
vertical synchronizing signal separating means for separating a vertical synchronizing signal from a composite synchronizing signal added to the luminance signal output from said reproducing means, and for outputting the vertical synchronizing signal;
wherein said carrier signal forming means forms a carrier signal a phase of which is changed over in synchronism with the vertical synchronizing signal output from said vertical synchronizing signal separating means, and for outputting the carrier signal;
wherein said color still image signal forming means forms a chrominance signal from the color-difference line-sequential signal output from said reproducing means by using the carrier signal output from said carrier signal forming means, for forming a color image signal for one field by multiplexing the luminance signal output from said reproducing means and the chrominance signal, and for outputting the color image signal and
comprises a skew compensating means for applying said skew compensation processing to the color image signal output from said color still image signal.

6. An apparatus according to claim 5, wherein said carrier signal forming means is arranged to form a first carrier signal a phase of which does not change and a second carrier signal a phase of which is inverted in synchronism with timing of changeover of color-difference signals in the color-difference line-sequential signal, and output the first and second carrier signals.

7. An apparatus according to claim 6, wherein said second carrier signal has its phase shifted 90° relative to said second carrier signal.

8. An apparatus according to claim 6, wherein said carrier signal forming means is arranged to reverse, in every vertical synchronizing period, rotation of the phase inversion of said second carrier signal in synchronism with the vertical synchronizing signal separated by said vertical synchronizing signal separating means.

## Patentansprüche

1. Bildsignal-Wiedergabevorrichtung zum Wiedergeben von einem Aufzeichnungsmedium, auf dem ein Halbbild-Bildsignal aufgezeichnet ist, welches aus einem Luminanzsignal und einem zeilensequentiellen Farbdifferenzsignal besteht, wobei die Vorrichtung umfaßt:
(A) eine Wiedergabeeinrichtung (6-12) zum Wiedergeben des auf dem Aufzeichnungsmedium aufgezeichneten Bildsignals, Trennen des Bildsignals in das Luminanzsignal und das zeilensequentielle Farbdifferenzsignal und Ausgeben des Luminanzsignals und des zeilensequentiellen Farbdifferenzsignals;
(B) eine Trägersignal-Erzeugungseinrichtung (19) zum Erzeugen und Ausgeben eines Trägersignals, in welchem eine Phase synchron mit dem Auftreten des Wechsels von Farbdifferenzsignalen in dem durch die Wiedergabeeinrichtung ausgegebenen zeilensequentiellen Farbdifferenzsignal wechselt;
(C) eine Chrominanzsignal-Erzeugungseinrichtung (16, 17) zum Erzeugen eines Chrominanzsignals aus dem durch die Wiedergabeeinrichtung ausgegebenen zeilensequentiellen Farbdifferenzsignal unter Verwendung des durch die Trägersignal-Erzeugungseinrichtung ausgegebenen Trägersignals und zum Ausgeben des Chrominanzssignals; und
(D) eine Farbstehbildsignal-Erzeugungseinrichtung (21) zum Erzeugen eines Vollbild-Farbbildsignals durch Multiplexen des durch die Wiedergabeeinrichtung ausgegebenen Luminanzsignals und des durch die Chrominanzsignal-Erzeugungseinrichtung ausgegebenen Chrominanzsignals sowie zum Anwenden einer Skew-Kompensationsverarbeitung auf das Farbbildsignal durch wechselweises Zuführen einer halben Synchronisationsperiode und einer Nullverzögerung zu dem Farbbildsignal in nachfolgenden Vertikal-Synchronisationsperioden, um für ein Bild ein Farbstehbildsignal zu erzeugen und auszugeben.

2. Vorrichtung nach Anspruch 1, bei der die Chrominanzsignal-Erzeugungseinrichtung umfaßt:
(A) eine Simultan-Umwandlungseinrichtung zum Umwandeln des zeilensequentiellen Farbdifferenzsignals, welches durch die Wiedergabeeinrichtung ausgegeben wird, in zwei Arten von Farbdifferenzsignalen, die gleichzeitig ausgegeben werden;
(B) eine ausgeglichen modulierende Einrichtung zum ausgeglichenen Modulieren jeder der beiden Arten von Farbdifferenzsignalen, die durch die Simultan-Umwandlungseinrichtung ausgegeben werden, unter Verwendung des durch die Trägersignal-Erzeugungseinrichtung ausgegebenen Trägersignals, sowie zum Ausgeben der beiden ausgeglichen modulierten Arten von Farbdifferenzsignalen; und
(C) eine Frequenz-Multiplex-Einrichtung zum Frequenz-Multiplexen der beiden ausgeglichen modulierten Arten von Farbdifferenzsignalen, um ein frequenzmoduliertes Signal auszugeben.

3. Vorrichtung nach Anspruch 1, bei der die Trägersignal-Erzeugungseinrichtung derart angeordnet ist, daß ein erstes Trägersignal, dessen Phase sich nicht ändert, und ein zweites Trägersignal, dessen Phase synchron mit dem Zeitpunkt des Wechsels von Farbdifferenzsignalen in dem zeilensequentiellen Farbdifferenzsignal wechselt, erzeugt und das erste und das zweite Trägersignal ausgegeben werden.

4. Vorrichtung nach Anspruch 3, bei der die Phase des zweiten Trägersignals bezüglich des zweiten Trägersignals um 90° verschoben ist.

5. Vorrichtung nach Anspruch 1, umfassend
eine Vertikal-Synchronisationssignal-Trenneinrichtung zum Trennen eines Vertikal-Synchronisationssignals von einem Komposit-Synchronisationssignal, welches zu dem durch die Wiedergabeeinrichtung ausgegebenen Luminanzsignal hinzugefügt wird, sowie zum Ausgeben des Vertikal-Synchronisationssignals;
wobei die Trägersignal-Erzeugungseinrichtung ein Trägersignal erzeugt, dessen Phase synchron mit dem durch die Vertikal-Synchronisationssignal-Trenneinrichtung ausgegebenen Vertikal-Synchronisationssignal wechselt, und das Trägersignal ausgibt;
wobei die Farbstehbildsignal-Erzeugungseinrichtung aus dem zeilensequentiellen Farbdifferenzsignal, welches durch die Wiedergabeeinrichtung ausgegeben wird, unter Verwendung des durch die Trägersignal-Erzeugungseinrichtung ausgegebenen Trägersignals ein Chrominanzsignal erzeugt, um durch Multiplexen des durch die Wiedergabeeinrichtung ausgegebenen Luminanzsignals und des Chrominanzsignals ein Vollbild-Farbbildsignal zu erzeugen sowie das Farbbildsignal auszugeben, und
umfassend eine Skew-Kompensationseinrichtung zum Anwenden der Skew-Kompensationsverarbeitung auf das über das Farbstehbildsignal ausgegebene Farbbildsignal.

6. Vorrichtung nach Anspruch 5, bei der die Trägersignal-Erzeugungseinrichtung derart angeordnet ist, daß ein erstes Trägersignal, dessen Phase sich nicht ändert, und ein zweites Trägersignal, dessen Phase synchron mit dem Zeitpunkt des Wechsels von Farbdifferenzsignalen in dem zeilensequentiellen Farbdifferenzsignal wechselt, erzeugt und das erste und das zweite Trägersignal ausgegeben werden.

7. Vorrichtung nach Anspruch 6, bei der die Phase des zweiten Trägersignals bezüglich des zweiten Trägersignals um 90° verschoben ist.

8. Vorrichtung nach Anspruch 6, bei dem die Trägersignal-Erzeugungseinrichtung derart angeordnet ist, daß sie - in jeder Vertikal-Synchronisationsperiode - die Drehung der Phasenumkehr des zweiten Trägersignals synchron mit dem durch die Vertikal-Synchronisationssignal-Trenneinrichtung getrennten Vertikal-Synchronisationssignal umkehrt.

## Revendications

1. Appareil de reproduction de signaux d'images, servant à effectuer une reproduction à partir d'un support d'enregistrement ayant, enregistré sur lui, un signal d'image pour un champ, qui est constitué d'un signal de luminance et d'un signal à séquences de lignes à différences de couleurs, l'appareil comprenant :
(A) un moyen de reproduction (6 à 12) servant à reproduire le signal d'image enregistré sur le support d'enregistrement, à séparer le signal de luminance et le signal à séquence de ligne à différence de couleurs, et à émettre le signal de luminance et le signal de séquence de ligne à différence de couleurs;
(B) un moyen de formation de signal porteur (19) servant à former et à émettre un signal porteur dont la phase est commutée en synchronisme avec la cadencement de commutation de signaux de différence de couleurs, dans le signal à séquence de lignes de différence de couleurs émis par ledit moyen de reproduction;
(C) un moyen de formation de signal de chrominance (16, 17) servant à former un signal de chrominance à partir du signal à séquence de ligne à différence de couleurs émis par ledit moyen de reproduction, à l'aide du signal porteur émis par ledit moyen de formation du signal porteur, et à émettre le signal de chrominance; et
(D) un moyen de formation de signal d'image stable en couleurs (21) servant à former un signal d'image en couleurs pour un champ, en multiplexant le signal de luminance émis par ledit moyen de reproduction et le signal de chrominance émis par ledit moyen de formation de signal de chrominance, et à appliquer un traitement de compensation de défauts d'alignement au signal d'image en couleurs, en introduisant alternativement la moitié d'une période de synchronisation horizontale et un retard nul pour ledit signal d'image en couleurs dans des périodes de synchronisation verticale subséquente, afin de former et envoyer un signal d'image stables en couleurs pour une image.

2. Appareil selon la revendication 1, dans lequel ledit moyen de formation de signal de chrominance comprend :
(A) un moyen de conversion simultané servant à convertir le signal à séquence de ligne à différence de couleurs émis par ledit moyen de reproduction, en deux types de signaux de différence de couleurs qui sont simultanément émis;
(B) un moyen de modulation équilibré pour effectuer une modulation équilibrée de chacun des deux types de signaux de différence de couleurs émis par ledit moyen de conversion simultanée, à l'aide du signal porteur émis par lesdits moyens de formation de signal porteur, et à émettre les deux types de signaux de différence de couleurs ayant subi une modulation équilibrée; et
(C) un moyen de multiplexage de fréquence pour effectuer un multiplexage de fréquence des deux types de signaux de différence de couleurs ayant subi une modulation équilibrée, afin d'émettre un signal à fréquence multiplexée.

3. Appareil selon la revendication 1, dans lequel ledit moyen de formation de signal porteur est agencé de façon à former un premier signal porteur dont la phase ne varie pas et un deuxième signal porteur dont la phase est inversée en synchronisme avec le cadencement de commutation de signaux de différence de couleurs dans le signal à séquence de ligne à différence de couleurs, et de façon à émettre les premiers et deuxièmes signaux porteurs.

4. Appareil selon la revendication 3, dans lequel ledit deuxième signal porteur a sa phase décalée de 90° par rapport audit deuxième signal porteur.

5. Appareil selon la revendication 1, comprenant
un moyen de séparation de signal de synchronisation verticale, afin de séparer un signal de synchronisation verticale depuis un signal de,synchronisation composite ajouté au signal de luminance émis par ledit moyen de reproduction, et à émettre le signal de synchronisation verticale;
dans lequel ledit moyen de formation de signal porteur forme un signal porteur dont la phase est commutée en synchronisme avec le signal de synchronisation verticale émis par ledit moyen de séparation de signal de synchronisation verticale, et afin d'envoyer le signal porteur;
dans lequel ledit moyen de formation de signal d'image stables en couleurs forme un signal de chrominance à partir du signal à séquence de lignes de différence de couleurs émis par le moyen de reproduction, à l'aide du signal porteur émis par ledit moyen de formation de signal porteur, afin de former un signal d'image couleurs pour un champ en multiplexant le signal de luminance émis par ledit moyen de reproduction et le signal de chrominance, et afin d'envoyer le signal d'image couleurs, et
comprend un moyen de compensation de défauts d'alignement servant à appliquer ledit traitement de compensation de défauts d'alignement au signal d'image couleurs émis par ledit moyen de formation de signal d'image stables en couleurs.

6. Appareil selon la revendication 5, dans lequel ledit moyen de formation de signal porteur est agencé de façon à former un premier signal porteur dont la phase ne varie pas et un deuxième signal porteur dont la phase est inversée en synchronisme avec le cadencement de commutation de signaux de différence de couleurs dans le signal à séquence de lignes de différence de couleurs, et à envoyer les premiers et deuxièmes signaux porteurs.

7. Appareil selon la revendication 6, dans lequel le deuxième signal porteur a sa phase décalée de 90° par rapport audit deuxième signal porteur.

8. Appareil selon la revendication 6, dans lequel ledit moyen de formation de signal porteur est agencé de façon à inverser, à chaque période de synchronisation verticale, la rotation de l'inversion de phase dudit deuxième signal porteur en synchronisme avec le signal de synchronisation verticale séparé par ledit moyen de séparation de signal de synchronisation verticale.
